# EUROPÄISCHE PATENTSCHRIFT

(11) **EP 1 495 236 B1**
(45) Veröffentlichungstag und Bekanntmachung des Hinweises auf die Patenterteilung: **31.08.2005**
(21) Anmeldenummer: 03708277.3
(22) Anmeldetag: 01.04.2003
(51) Int. Cl.: F16D 1/12, B64C 21/10, B63B 1/34

(54) **FESTK RPER MIT MIKROSTRUKTURIERTER OBERFL CHE**
SOLID BODY HAVING A MICROSTRUCTURED SURFACE
CORPS SOLIDE A SURFACE MICROSTRUCTUREE

(30) Priorität: 17.04.2002 DE 10217111
(43) Veröffentlichungstag der Anmeldung: 12.01.2005
(73) Patentinhaber: Röhm GmbH & Co. KG, 64293 Darmstadt (DE)
(72) Erfinder: KROHMER, Christoph, 64589 Stockstadt (DE); LORENZ, Hans, 64291 Darmstadt (DE); BRAND, Norbert, 64291 Darmstadt (DE)
(74) Vertreter: Gottschalk, Michael
(86) Internationale Anmeldenummer: PCT/EP2003/003368
(87) Internationale Veröffentlichungsnummer: WO 2003/087604

(56) Entgegenhaltungen:
- EP-A- 0 246 915
- EP-A- 0 543 647
- EP-A- 0 726 398
- EP-A- 0 846 617
- WO-A-95/11388
- DE-A- 3 534 293
- DE-A- 3 609 541
- DE-U- 20 114 878
- US-A- 4 706 910
- US-A- 4 930 729
- US-B1- 6 345 791
- HALL T: "RIPPENSTRUKTUREN VERMINDERN AERODYNAMISCHEN WIDERSTAND SOWIE RAUSCHEN INFOLGE STROEMUNGEN" MESSEN UND PRUFEN, IVA INTERNATIONAL, MUNCHEN, DE, Nr. 3, 1. März 1990 (1990-03-01), Seiten 116-117, XP000175645 ISSN: 0937-3446

## Beschreibung

### Gebiet der Erfindung

Die Erfindung betrifft einen Festkörper aus Kunststoff, Glas, Keramik oder Metall, der zumindest teilweise eine mikrostrukturierte Oberfläche mit in einer Vorzugsrichtung orientierten Reihen von im Querschnitt trapez- oder keilförmigen Graten aufweist. Die Erfindung betrifft weiterhin Verfahren zur Herstellung des Festkörpers und mögliche Verwendungen.

### Stand der Technik

Auf technischem Wege hergestellte Festkörper mit mikrostrukturierten Oberflächen sind an sich bekannt, siehe beispielweise US-B-6 345 791, und folgen dem aus der Natur unter anderem von der Haifischhaut bekannten reibungsvermindernden physikalischen Prinzip. Sie werden in Folge trivial teils auch als "Haifischhäute" bezeichnet. Bei geeigneter Strukturierung kann bei turbulenter Überströmung mit einem Gas oder einer Flüssigkeit eine Verminderung des Reibungs- bzw. Strömungswiderstandes beobachtet werden.

DE 36 09 541 A1 beschreibt einen verminderten Strömungswiderstand durch eine, eine herabgesetzte Wandschubspannung aufweisende Oberfläche eines turbulent überströmten Körpers mit in Strömungsrichtung verlaufenden Rillen, die durch scharfkantig ausgebildete Rippen voneinander getrennt sind. Die Rippen sich dabei nicht in durchgängigen Reihen parallel sondern jeweils gegeneinander versetzt angeordnet.

EP 0 846 617 A2 beschreibt eine Oberfläche für eine von einer Strömungshauptrichtung aufweisen Strömung turbulent überströmten Wand, mit in der Strömungsrichtung ausgerichteten und seitlich zu der Strömungshauptrichtung beabstandeten Rippen, deren Höhe 45 bis 60 % des Rippenabstands beträgt. Die Rippen sind keilförmig mit einem Keilwinkel von 20 bis 50° ausgebildet. Die Täler zwischen den Reihen können eben oder gewölbt sein.

### Aufgabe und Lösung

Die in DE 36 09 541 A1 beschriebenen Oberflächen haben den Nachteil, daß sie aufgrund der alternierenden Anordnung der Rippenelemente nur schwierig bzw. sehr aufwendig herstellbar sind und zugleich ihre reibungsvermindernde Wirkung nur gering ist.

Die in EP 0 846 617 A2 beschriebenen Strukturen gewährleisten eine relativ reibungsarme homogene Überströmung der Oberfläche. Durch die regelmäßige Anordnung der Mikrostruktur bildet sich jedoch eine vergleichsweise nur dünne Grenzschicht zwischen Oberfläche und überströmendem Medium, Fluid oder Gas, aus, die zur Auflösung der reibungsinduzierenden Schubspannung nicht optimal ist. Deshalb kann die Strömung leicht gestört werden und gegebenenfalls sogar abreißen.

Ausgehend vom Stand der Technik sollten Festkörper mit mikrostrukturierten Oberflächen weiterentwickelt werden um eine weitere Verminderung des Reibungs- bzw. Strömungswiderstandes zu erzielen.

Die Aufgabe wird gelöst durch einen
Festkörper aus Kunststoff, Glas, Keramik oder Metall, der zumindest teilweise eine mikrostrukturierte Oberfläche mit in einer Vorzugsrichtung orientierten Reihen von im Querschnitt trapez- oder keilförmigen Graten aufweist,
dadurch gekennzeichnet, daß
die Grate in der Höhe (H) Minima und Maxima aufweisen, die im Bereich von 0 mm bis 2 mm liegen, und
die Minima und Maxima periodisch mit Wellenlängen im Bereich von 0,005 bis 20 mm aufeinander folgen, und
der Abstand der Reihen von benachbarten Graten zueinander 0,002 mm bis 5 mm beträgt, wobei die Täler zwischen den Reihen eben, gewölbt oder spitz zulaufend sein können, und
Die im Querschnitt trapez- oder keilförmigen Grate weisen einen Keilwinkel (α) im Bereich von 15 bis 75° auf.

Der erfindungsgemäße Festkörper hat insbesondere den Vorteil, daß er bei Überströmung mit einem Gas oder einem Fluid einen sehr geringen Reibungs- bzw. Strömungswiderstand aufweist. Die wird insbesondere durch Oberflächenstruktur mit Reihen von im Querschnitt trapez- oder keilförmigen Graten erreicht.

Gleichzeitig wird dadurch, daß die Grate in der Höhe (H) Minima und Maxima aufweisen, die im Bereich von 0 mm bis 2 mm liegen, und die Minima und Maxima periodisch mit Wellenlängen im Bereich von 0,005 bis 20 mm aufeinander folgen erreicht, daß eine in sich etwas inhomogene Überströmung erreicht wird, die auch über längere Distanzen nicht abreißt. Dadurch kann erfindungsgemäß in Summe im Vergleich zum Stand der Technik ein besseres Ergebnis erzielt werden.

### Figuren

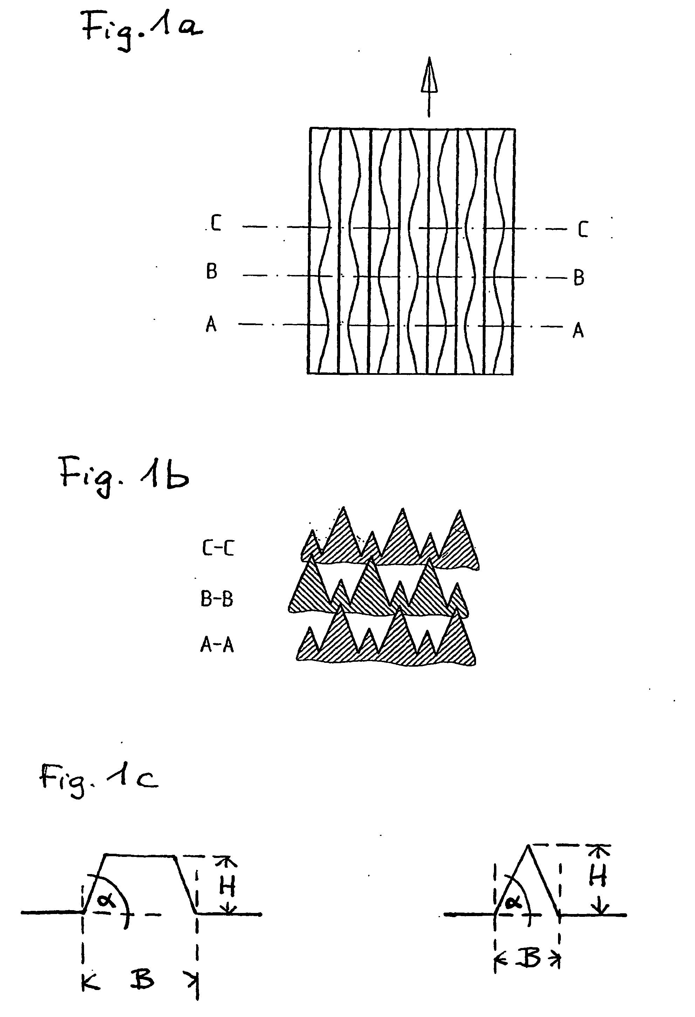

Die Erfindung wird durch die nachstehenden Figuren erläutert ist aber nicht auf diese beschränkt.
Fig 1a:
   Schematische Darstellung eines Ausschnitts aus einer extrudierten Kunststoffplatte von oben mit in der Höhe der Grate sinusförmig schwankenden, parallelen Reihen von keilförmigen Mikrostrukturen mit konstanten Keilwinkeln (α) von etwa 60°und spitzen Tälern. Die Mikrostrukturen schwanken periodisch in der Querschnitts-Basis-Breite. Der Abstand der Querschnittsebenen A-A, B-B, und C-C voneinander beträgt jeweils eine halbe Wellenlänge Der Minima- und Maximaverlauf benachbarter Reihen ist um eine halbe Wellenlänge versetzt. Der Pfeil zeigt die Extrusionsrichtung an..
Fig 1b:
   Querschnittsebenen A-A, B-B, und C-C der Fig. 1 a. Die Querschnitte A-A, B-B, und C-C zeigen die alternierenden Minima und Maxima der Höhen (H) der in parallelen Reihen verlaufenden Grate, die spitzen Täler sowie die schwankenden Querschnitts-Basis-Breite.
Fig 1c:
   Grate mit symmetrischem Trapezprofil (links) und symmetrischem Keilprofil (rechts) mit eingezeichneter Höhe (H), Querschnitts-Basis-Breite (B) und Keilwinkel (α) im Querschnitt.

### Ausführung der Erfindung

Die Erfindung betrifft einen
Festkörper aus Kunststoff, Glas, Keramik oder Metall, der zumindest teilweise eine mikrostrukturierte Oberfläche mit in einer Vorzugsrichtung orientierten Reihen von im Querschnitt trapez- oder keilförmigen Graten aufweist.

### Materialien

Bevorzugt sind Kunststoffe, insbesondere Duroplaste und besonders bevorzugt Thermoplaste. Bei den Thermoplasten sind amorphe Kunststoffe bevorzugt.

### Geeignete Kunststoff sind z. B.:

Polymethylmethacrylat-Kunststoff, schlagzäh modifiziertes Polymethylmethacrylat, Polycarbonat-Kunststoff, Polystyrol-Kunststoff, Styrol-Acryl-Nitril-Kunststoff, Polyethylentherephthatat-Kunststoff, glykolmodifizierten Polyethylentherephthalat-Kunststoff, Polyvinylchlorid-Kunststoff, transparente Polyolefin-Kunststoff, Acrylnitril-Butadien-Stryrol (ABS)-Kunststoff oder Mischungen (Blends) verschiedener thermoplastischer Kunststoffe.

Bevorzugt sind witterungsbeständige Kunststoffe wie Polymethacrylat-Kunststoff und/oder schlagzäh modifizierter Polymethacrylat-Kunststoff, Polyvinylidenfluorid-Kunststoff und/oder eine Mischung (Blend) aus Polymethacrylat-Kunststoff und Polyvinylidenfluorid-Kunststoff und/oder aus Polycarbonat-Kunststoff.

Um einer Abnutzung durch die anliegende Überströmung entgegenzuwirken sind insbesondere Kunststoffe mit hohen Oberflächenhärten geeignet.

Geeigent sind auch Liquid Cristall Polymers.

Bei den Metallen sind insbesondere Aluminium und Titan, sowie Legierungen dieser Metalle und gegebenenfalls auch Magnesium-Legierungen zu nennen.

### Oberflächenstrukturierung

Die Grate weisen in der Höhe (H) Minima auf, die im Bereich von 0 mm bis weniger als 2 mm liegen. Bevorzugt liegen die Minima im Bereich 0,001 bis 1 mm, insbesondere von im Bereich von 0,01 bis 0,1 mm.

Die Grate weisen in der Höhe (H) Maxima auf, die im Bereich von mehr als 0 mm bis 2 mm liegen. Bevorzugt liegen die Maxima im Bereich 0,001 bis 1 mm, insbesondere von im Bereich von 0,01 bis 0,1 mm.

Die Maxima sind dabei immer größer als Minima. Bevorzugt sind die Maxima mindestens 0,001 mm, besonders bevorzugt mindestens 0,01 mm größer als die Minima.

Die Höhe der Grate bestimmt sich relativ zu den Tälern. Liegen die Täler in einer Bezugsebene schwanken die Höhen der Grate relativ dazu. Theoretisch ist es auch möglich, daß die Grate in einer Bezugsebene liegen und die Täler in der Tiefe schwanken, wodurch ebenfalls schwankende Höhen der Grate bewirkt werden. Minima von 0 mm liegen in der Ebene der Täler. Bevorzugt sind die Minima jedoch größer als 0 mm.

Die Minima und Maxima folgen periodisch mit Wellenlängen im Bereich von 0,005 bis 20 mm, bevorzugt von 0,05 bis 5 mm aufeinander. Bevorzugt ist ein sinusförmiger Wellenverlauf.

Der Abstand der Reihen von benachbarten Graten zueinander beträgt 0,002 mm bis 5 mm, bevorzugt 0,005 bis 0,5 mm, insbesondere 0,02 bis 0,2 mm, wobei die Täler zwischen den Reihen eben, gewölbt oder spitz zulaufend sein können. Bevorzugt verlaufen die Reihen der Grate in der Vorzugsrichtung parallel zueinander.

Die im Querschnitt trapez- oder keilförmigen Grate weisen einen Keilwinkel (α, s. Figur 1c)) im Bereich von 15 bis 75 Grad, bevorzugt 30 bis 60 Grad, insbesondere 30 bis 45 Grad auf. Die trapez- oder keilförmigen Querschnitte sind bevorzugt symmetrisch, können jedoch gegebenenfalls auch leicht oder stärker asymmetrisch sein. Letzteres ist jedoch strömungstechnisch problematischer und fertigungstechnisch schwieriger realisierbar. In diesem Fall ist der dem Winkel (α) gegenüberliegende Winkel (α') von (α) verschieden, sollte jedoch ebenfalls im für (α) angegebenen Bereich liegen. Sofern sich dadurch keine wesentlichen Beeinträchtigungen in der Funktion ergeben, ist auch möglich Übergangsformen und leichte Abwandlungen aus im Querschnitt trapez- oder keilförmigen Graten zu verwenden, sowie Mischungen dieser Formklassen in einer Oberfläche.

Die Grate können zusätzlich periodisch in der Querschnitts-Basis-Breite (B) schwanken.

Die Grate können in ihrer Vorzugsrichtung gerade verlaufen oder auch seitlich um die Vorzugsrichtung, bevorzugt sinusartig, schwingend verlaufen. Bei um die Vorzugsrichtung seitlich schwingendem Gratseitenverlauf können die Wellenlängen der Seitenschwingungen 0,005 bis 20 mm, bevorzugt 0,001 bis 10 mm und insbesondere 0,01 bis 1 mm betragen.

Der Keilwinkel (α) der Grate ist bezogen auf eine Reihe bevorzugt konstant.

Die periodischen Höhenschwankungen der Grate benachbarter Reihen sind bevorzugt alternierend, besonders bevorzugt um eine halbe Wellenlänge, insbesondere um eine halbe sinusförmige Wellenlänge, zueinander versetzt. Dies hat den Vorteil, daß das Entstehen von unerwünschten Resonanzschwingungen und/oder akustischen Schwingungen deutlich verringert wird.

Ausgehend von der vorliegenden Erfindung ist für den Fachmann ersichtlich, daß die hier erläuterten Oberflächenstrukturen noch in dieser oder jener, nicht explizit genannten Weise abgewandelt werden können, ohne daß deren Funktion wesentlich verändert wird. Solche Abwandlungen sollen als in der Erfindung eingeschlossen betrachtet werden.

### Herstellungsverfahren

Die Herstellung der Festkörper bzw. entsprechender Formteile ist durch Abbildung der Mikrostrukturen im Urformverfahren, Umformverfahren, abtragende Bearbeitung oder Abscheidetechnik möglich, z. B. durch Prägeverfahren, spanabhebende Bearbeitung, Gießen, Spritzgießen, energiereiche Strahlung (z. B. Laserstrahlen), Photoätztechnik etc.

Bei den Kunststoffen bieten sich Verfahren an bei denen ein polymerisierendes Gemisch, z. B. ein Sirup aus Methylmethacrylat und Polymethylmethacrylat, enthaltend einen Polymerisationsinitiator, auf einer Urform abgebildet wird. Dies kann z. B. eine Glasplatte mit negativ abgebildeter Mikrostruktur sein.

Bei Thermoplasten können z. B. extrudierte Platten oder Folien über Prägewalzen, bevorzugt Metallwalzen geführt werden, auf denen eine mit negativ abgebildete Mikrostruktur vorhanden ist.

Vorteilhaft kann die Anwendung eines Coextrusions-Verfahrens sein, bei dem die Mikrostruktur in eine leichter prägbare Schicht eingeprägt wird, während eine darunterliegende Kunststoffschicht im wesentlichen eine Trägerfunktion übernimmt. EP-A 659 531 offenbart ein entsprechendes Coextruions-Verfahren zum Einprägen von Makrostrukturen (Fresnellinsen), das im Prinzip nach Anpassung im Rahmen der fachmännischen Routine aber auch für Mikrostrukturen geeignet ist.

### Verwendungen

Die erfindungsgemäßen Festkörper können verwendet werden als Bauteile mit reibungsreduzierenden Oberflächen zur Reibungsreduzierung von Luft- oder Wasserströmungen an Oberflächen von (Luft-, Wasser- oder Land-) Fahrzeugen oder als Leitungen und Behälter zur Reibungsreduzierung von Fluidströmungen bei schnellfließenden Fluiden in Leitungen und Behältern, zur Haftungsverringerung von Schmutzstoffen auf schützenswerten Oberflächen, als antimikrobielle Oberflächen, als lichtbrechende und/oder diffus lichtstreuende Oberflächen, als entspiegelte Oberflächen.

Neben den vorteilhaften strömungstechnische Eigenschaften können auch technisch optische, haptische, adhäsive und/oder thermodynamische Effekte erzielt werden und welche bevorzugt für Kunststoffhalbzeuge oder Kunststofffertigteile an ihrer Oberfläche gefordert werden.

### Vorteilhafte Wirkungen

Die Erfindung liegt in der Verbesserung der beschriebenen Geometrie unter der Maßgabe einer weiteren Reduzierung der Reibung von strömenden Fluiden oder Gasen, insbesondere Luft, an der erfindungsgemäß strukturierten Oberfläche, indem durch einen bevorzugt sinusförmigen Höhenverlauf und/oder einen sinusförmigen Seitenverlaufs der Rillen- bzw. Gratstruktur. Dadurch werden lokale Kleinstwirbel erzeugt, welche weitgehend stationär blieben und zum vorbeiströmenden Fluid eine verbesserte Grenzschicht ausbilden, in welcher reibungsinduzierende Schubspannungen besser abgebaut werden können und dadurch die bremsende Reibwirkung des Fluids oder Gases auf die Oberfläche reduziert wird.

Aufgrund der vergleichsweise größeren Unregelmäßigkeit der Struktur gegenüber den bekannten Geometrien wird das Entstehen von schädlichen Resonanzschwingungen ebenso deutlich verringert. Bei Schmutzauftrag bieten die lokalen Erhöhungen (Maxima der Sinusgrate) Angriffspunkte für Abrieb beziehungsweise Widerstand gegen vollständige Benetzung der Oberfläche, wodurch eine zusammenhängende Struktur der Schmutzschicht zerstört wird und diese in Schmutzinseln zerfällt, welche ihrerseits aufgrund der steilen Gratflanken leicht abgewaschen werden können. Dadurch wird ein Selbstreinigungseffekt erzielt.

Bei Ausrüstung der Oberfläche mit biozid wirkenden Agentien, welche beispielsweise auflackiert, coextrudiert oder in die Basismasse eingebracht werden können, wird durch die Vergrößerung der Oberfläche insgesamt die Wirkung der Agentien unterstützt und gegenüber einer gleichmäßigen Struktur verbessert.

Optische Eigenschaften: Die erfindungsgemäße Struktur reduziert Lichtreflexionen an der Oberfläche. Zudem entstehen durch Lichtbrechung und Wiederaustritt von Strahlung aus der Oberfläche, welche aus einem transparenten bis transluzenten und klaren oder eingefärbten Kunststoff gefertigt werden kann, besonders dekorative Farb- und Lichteffekte. Die strukturierte Oberfläche bietet einen besonders griffigen Halt, da sich die Erhebungen der Grate lokal tiefer in Haut, Textilgewebe, Leder etc. eindrücken lassen als ebene Strukturen ohne lokal vorspringende Erhebungen.

Die erfindungsgemäße Struktur kann aus amorphen, teilkristallinen, vernetzten und unvernetzten Kunststoffen, aus Metallen und niedrig schmelzenden Gläsern urformend, umformend gefertigt oder spanabhebend oder mit energiereicher Strahlung aus einer weitgehend ebenen Oberfläche herausgearbeitet werden.

## Patentansprüche

1. Festkörper aus Kunststoff, Glas, Keramik oder Metall, der zumindest teilweise eine mikrostrukturierte Oberfläche mit in einer Vorzugsrichtung orientierten Reihen von im Querschnitt trapez- oder keilförmigen Graten aufweist,
**dadurch gekennzeichnet, daß**
die Grate in der Höhe (H) Minima und Maxima aufweisen, die im Bereich von 0 mm bis 2 mm liegen, und
die Minima und Maxima periodisch mit Wellenlängen im Bereich von 0,005 bis 20 mm aufeinander folgen, und
der Abstand der Reihen von benachbarten Graten zueinander 0,002 mm bis 5 mm beträgt, wobei die Täler zwischen den Reihen eben oder spitz zulaufend sein können, und
die im Querschnitt trapez- oder keilförmigen Grate einen Keilwinkel (α) im Bereich von 20 bis 60° aufweisen.

2. Festkörper nach Anspruch 1, **dadurch gekennzeichnet, daß** die Grate zusätzlich periodisch in der Querschnitts-Basis-Breite (B) schwanken.

3. Festkörper nach Anspruch 1 und 2, **dadurch gekennzeichnet, daß** der Keilwinkel (α) der Grate bezogen auf eine Reihe konstant ist.

4. Festkörper nach einem oder mehreren der Ansprüche 1 bis 3, **dadurch gekennzeichnet, daß** die Grate einen um die Vorzugsrichtung seitlich schwingendem Verlauf mit Wellenlängen der Seitenschwingungen von 0,005 bis 20 mm aufweisen.

5. Festkörper nach einem oder mehreren der Ansprüche 1 bis 4, **dadurch gekennzeichnet, daß** die periodischen Höhenschwankungen der Grate benachbarter Reihen alternierend zueinander versetzt sind.

6. Festkörper nach Anspruch 5, **dadurch gekennzeichnet, daß** die Höhenschwankungen der Grate benachbarter Reihen jeweils um eine halbe Wellenlänge zueinander versetzt sind.

7. Verfahren zur Herstellung von Festkörpern nach einem oder mehreren der Ansprüche 1 bis 6, in an sich bekannter Weise durch Abbildung der Mikrostrukturen im Urformverfahren, Umformverfahren, abtragende Berabeitung oder Abscheideverfahren, insbesondere durch Prägeverfahren, spanabhebende Bearbeitung, Gießen, Spritzgießen, energiereiche Strahlung und/oder Photoätztechnik.

8. Verwendung von Festkörpern nach einem oder mehreren der Ansprüche 1 bis 6 als Bauteile mit reibungsreduzierenden Oberflächen zur Reibungsreduzierung von Luft- oder Wasserströmungen an Oberflächen von (Luft-, Wasser- oder Land-) Fahrzeugen oder als Leitungen und Behälter zur Reibungsreduzierung von Fluidströmungen bei schnellfließenden Fluiden in Leitungen und Behältern, zur Haftungsverringerung von Schmutzstoffen auf schützenswerten Oberflächen, als antimikrobielle Oberflächen, als lichtbrechende und/oder diffus lichtstreuende Oberflächen, als entspiegelte Oberflächen.

## Claims

1. Solid body made of plastics, glass, ceramics or metal, which has at least in part a microstructured surface with rows of burrs of trapezoidal or wedge-shaped cross-section oriented in a preferential direction,
**characterised in that**
the burrs have minima and maxima in height (H) which are in the range from 0 mm to 2 mm, and
the minima and maxima follow one another periodically with wavelengths in the range from 0.005 to 20 mm, and
the spacing between the rows of adjacent burrs is 0.002 mm to 5 mm from one another, while the valleys between the rows may be flat or converge in a point, and
the burrs which are trapezoidal or wedge-shaped in cross-section have a wedge angle (α) in the range from 20 to 60°.

2. Solid body according to claim 1, **characterised in that** the burrs additionally fluctuate periodically in their cross-sectional base width (B).

3. Solid body according to claims 1 and 2, **characterised in that** the wedge angle (α) of the burrs in relation to a row is constant.

4. Solid body according to one or more of claims 1 to 3, **characterised in that** the burrs have a configuration which oscillates laterally about the preferential direction, with the wavelengths of the lateral oscillations being from 0.005 to 20 mm.

5. Solid body according to one or more of claims 1 to 4, **characterised in that** the periodic fluctuations in the height of the burrs in adjacent rows are alternately offset from one another.

6. Solid body according to claim 5, **characterised in that** the fluctuations in the height of the burrs in adjacent rows are offset from one another by half a wavelength in each case.

7. Method of producing solid bodies according to one or more of claims 1 to 6, in a manner known *per se,* by forming the microstructures in the original moulding process, remoulding processes, machining or deposition processes, particularly by stamping, machining to remove material, casting, injection moulding, high-energy radiation and/or photoetching technology.

8. Use of solid bodies according to one or more of claims 1 to 6 as components with friction-reducing surfaces for reducing the friction of currents of air or water over surfaces of (air, water or land) vehicles or as pipes and containers for reducing the friction of fluid currents in fast-flowing fluids in pipes and containers, for reducing the adhesion of dirt to surfaces needing protection, as antimicrobial surfaces, as light-refracting and/or diffusing light-scattering surfaces, as antireflective surfaces.

## Revendications

1. Corps solide en matière plastique, en verre, en céramique ou en métal qui présente au moins en partie une surface microstructurée comportant des rangées, orientées dans une direction préférentielle, d'arêtes ayant une section trapézoïdale ou cunéiforme,
**caractérisé en ce que**
les arêtes présentent des minima et des maxima de hauteur (H) de l'ordre de 0 à 2 mm et
les minima et maxima se suivent périodiquement avec des longueurs d'onde de l'ordre de 0,005 à 20 mm et
la distance entre les rangées d'arêtes voisines mesure de 0,002 mm à 5 mm, les creux entre les rangées pouvant se terminer à plat ou en pointe et
les arêtes, ayant une section trapézoïdale ou cunéiforme, présentent un angle de coupe (α) de l'ordre de 20 à 60°.

2. Corps solide selon la revendication 1,
**caractérisé en ce que**
les arêtes varient en plus périodiquement dans la largeur de base transversale (B).

3. Corps solide selon la revendication 1 et 2,
**caractérisé en ce que**
l'angle de coupe (α) des arêtes par rapport à une rangée est constant.

4. Corps solide selon l'une quelconque ou plusieurs des revendications 1 à 3,
**caractérisé en ce que**
les arêtes présentent un parcours oscillant latéralement autour de la direction préférée, les oscillations latérales ayant des longueurs d'onde de 0,005 à 20 mm.

5. Corps solide selon l'une quelconque ou plusieurs des revendications 1 à 4,
**caractérisé en ce que**
les variations périodiques de hauteur des arêtes de rangées voisines sont décalées en alternance l'une par rapport à l'autre.

6. Corps solide selon la revendication 5,
**caractérisé en ce que**
les variations de hauteur des arêtes de rangées voisines sont décalées l'une par rapport à l'autre respectivement d'une demi-longueur d'onde.

7. Procédé de fabrication de corps solides selon l'une quelconque ou plusieurs des revendications 1 à 6, d'une manière connue par reproduction des microstructures dans le procédé de façonnage initial, par façonnage, usinage par enlèvement ou par découpe, en particulier par estampage, usinage par enlèvement de copeaux, coulée, moulage par injection, irradiation énergétique et/ou photogravure.

8. Utilisation de corps solides selon l'une quelconque ou plusieurs des revendications 1 à 6, comme composants ayant des surfaces réduisant le frottement destinées à réduire les frottements de flux d'air ou d'eau à la surface de véhicules (aériens, aquatiques ou terrestres), ou comme conduits et récipients destinés à réduire les frottements de flux de fluides rapides dans des conduits et des récipients, à réduire l'adhérence de matières polluantes sur des surfaces qui doivent être protégées, comme surfaces antimicrobiennes, comme surfaces réfringentes et/ou diffusant la lumière, en comme surfaces antireflet.
